Europäisches Patentamt

European Patent Office

Office européen des brevets

(11) Publication number: **0 338 646**
**A2**

# EUROPEAN PATENT APPLICATION

(21) Application number: **89200995.2**

(51) Int. Cl.⁴: **A01B 33/16**

(22) Date of filing: **19.04.89**

(30) Priority: **20.04.88 NL 8801012**

(43) Date of publication of application:
**25.10.89 Bulletin 89/43**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A soil cultivating machine.**

(57) The invention relates to a soil cultivating machine comprising a plurality of soil working members
(3) and at least one roller (11) which is provided with
a plurality of scraper members (14). The scraper
members (14) include an arm (18) which is arranged
slidably at the lower side of a box-like carrier (15,
15A) extending along said roller (11). The scraper
member (14) includes a scraper element (24) that is
hollow or concave at its upper side.

FIG. 3

EP 0 338 646 A2

# A SOIL CULTIVATING MACHINE

The invention relates to a soil cultivating machine comprising a plurality of soil working members and at least one roller which is provided with a plurality of scraper members.

In prior art soil cultivating machines of the above-defined type, the scraper members are mostly arranged at upwardly extending arms which are comparatively long. As has been found in practice, owing to their length, the arms are susceptible to damage caused by hard objects, such as stones.

In the construction according to the invention, the scraper members are designed such that their susceptibility to damage is decreased in that they include an arm which is arranged slidably at the lower side of a box-like carrier extending along said roller. As a result, the arm can have a comparatively short length and, moreover, extend in such a direction that the hard objects are removed easily.

A further aspect of the invention concerns a soil cultivating machine of the above-defined type, wherein there is arranged an at least substantially horizontal connection bolt for the arm. Owing to this, it is possible to prevent that the bolt is damaged to such an extent that a loosening of the scraper members is impeded.

A still further aspect of the invention concerns a soil cultivating machine of the above-defined type, wherein the arm is arranged between two downwardly extending plates. By means of these plates it is possible to obtain an effective clamping of the arm, in particular when through slots arranged in said plates there is inserted a bolt, with the aid of which the plates are clamped against the arm.

For a better understanding of the invention and to show how the same may be carried into effect, reference will now be made, by way of example, to some embodiments shown in the accompanying drawings, wherein:

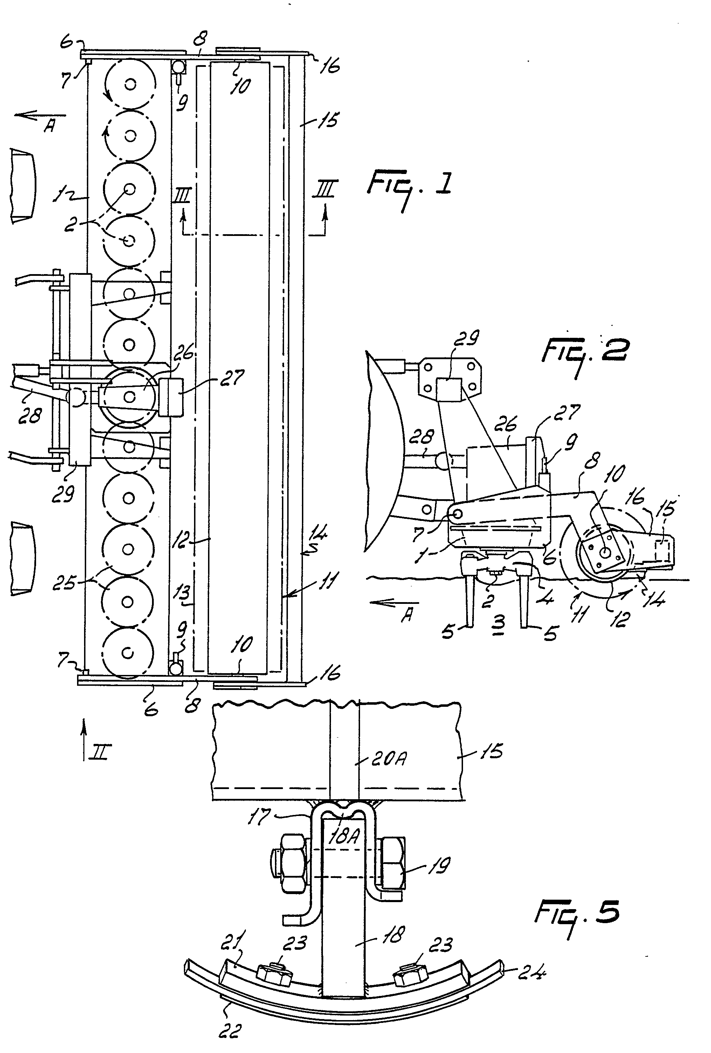

Figure 1 is a plan view of a soil cultivating machine comprising a construction according to the invention;

Figure 2 is a side view of the machine, taken in the direction of the arrow II in Figure 1;

Figure 3 is, to an enlarged scale, a view taken on the line III-III in Figure 1;

Figure 4 is a view taken in the direction of the arrow IV in Figure 3;

Figure 5 is a view taken in the direction of the arrow V in Figure 4;

Figure 6 is a view in accordance with Figure 3 of a second embodiment of the attachment of a scraper member, and

Figure 7 is a view taken in the direction of the arrow VII in Figure 6.

The implement shown in the drawings concerns a soil cultivating machine, in particular one for the preparation of a seed bed.

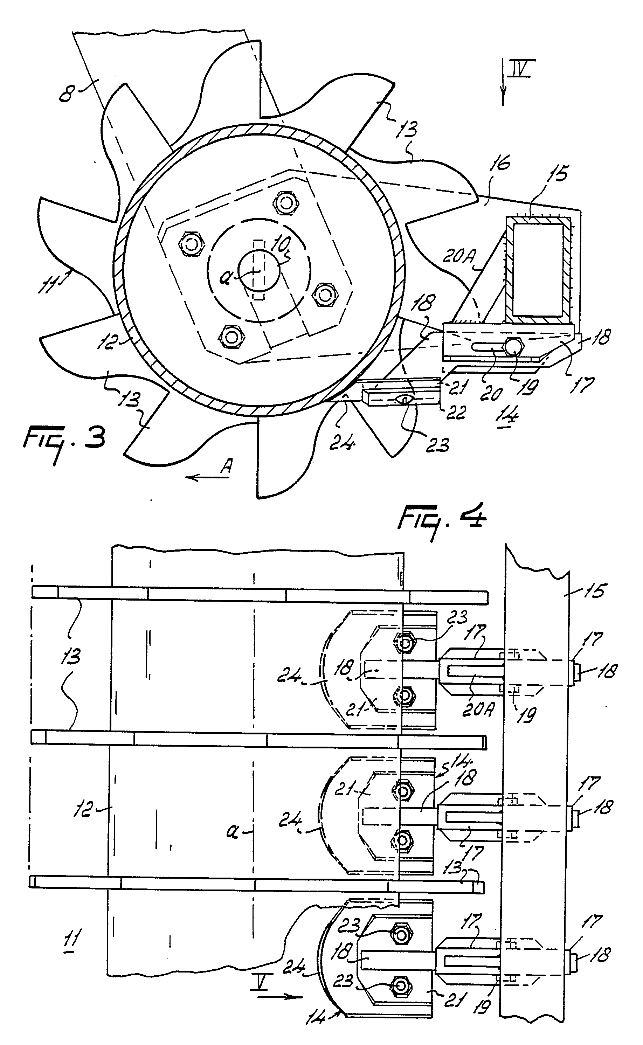

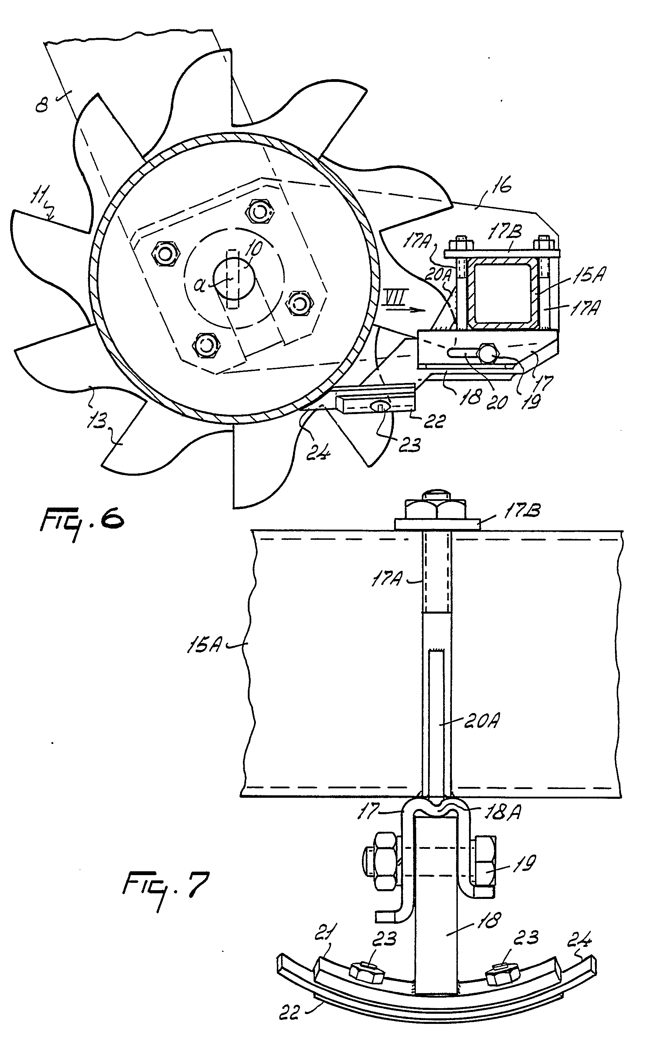

The machine comprises a box-like frame portion 1 which extends transversely to the direction of operative travel A and wherein there are supported at equal interspaces of preferably 25 cms the upwardly directed, preferably vertical, shafts 2 of soil working members 3. At its end projecting from the bottom side of the frame portion 1, the shaft of each soil working member 3 is provided with an at least substantially horizontal carrier 4. Near its ends, each carrier 4 is fitted with downwardly extending soil working elements 5 constituted by tines. The ends of the box-like frame portion 1 are closed by means of plates 6 which extend at least substantially parallel to the direction of operative travel A and are directed upwardly. Near its leading side, each of the plates 6 is provided with a pin 7, the arrangement being such that the pins 7 are in alignment. About each of the pins 7 there is arranged freely pivotably an arm 8 which extends rearwardly along the inner side of a plate 6. Near the rear side of the frame portion 1 there is arranged an adjusting device 9, by means of which each arm 8 can be adjusted to and locked in a plurality of positions around the pin 7, the adjusting device in the present embodiment being designed as a threaded spindle. Near its downwardly directed end, each of the arms 8 constitutes a support for a packer roller 11 which is supported freely rotatably by means of shafts 10 and bearings accommodated in bearing housings. The packer roller 11 comprises a tubular portion 12 which is supported freely rotatably by means of the shafts 10 and at its circumference is provided with crowns of cams 13 arranged at equal interspaces. At the rear side there are provided between the crowns of cams 13 scraper members 14 which are attached to a carrier beam 15, which carrier beam 15 is arranged between the ends of at least substantially horizontal supports 16 fitted to the arms 8. As is apparent from Figure 3, the carrier beam 15 is box-like in shape and has a rectangular cross-section. The carrier beam 15 is arranged in such a manner that its centre is located at the level of the rotational axis a of the packer roller 11 and that the longest side of the rectangle extends at least substantially vertically. At the lower side of the box-like carrier beam 15 there is arranged by welding for each of the scraper members 14 a support 17, which support 17 consists of plate material bent in the shape of a U and is arranged such that the legs of the U are directed downwardly and extend at least substantially parallel to the direction of operative travel A (Figure 5). The portion located between the legs of the U includes a downwardly directed bulge 18A and is attached to the lower side of the box-like carrier beam 15 by welding. As is furthermore apparent from Figure 5, the one leg of the U is shorter than the other and both legs are bent outwardly at right angles over part of their lower ends. Between the legs of the U-shaped support 17 there is arranged the widest, upwardly extending portion of a strip-shaped arm 18 which, from the front side of the support 17, over a part extends obliquely downwardly and forwardly (Figure 3), the said portion being located at least substantially tangentially relative to the rotational axis a of the packer roller 11. Between the plates formed by the legs of the U-shaped support 17, the arm 18 is arranged such that its upper portion abuts against the bulge 18A provided there. The attachment is effected by means of a single bolt 19 extending at least substantially transversely to the direction of operative travel A and horizontally. The bolt 19 is movable in a slot 20, which slot 20 extends at least substantially horizontally and is arranged in each of the legs of the U-shaped support 17. Owing to the legs of the U-shaped plate support 17 and the presence of the slot 20, it is possible to obtain a highly effective and reliable clamping of an arm 18 between the legs by means of a single bolt 19, to which clamping the bulge 18A contributes as well. The bolt 19 is secured against rotation by means of the lower end of the short leg which is bent at a right angle (Figure 5). Near its front side, the support 17 is connected to the front side of the box-like carrier beam 15 by means of an obliquely upwardly and rearwardly extending shore 20A (Figure 3). The lower end of the arm 18 is provided with an at least substantially horizontal supporting plate 21 which, in cross-section, is of a hollow or concave design at its upper side (Figure 5). By means of a second supporting plate 22 and bolts 23 provided on either side of the arm 18, a scraper element 24 is arranged against the supporting plate 21, which scraper element 24, like the supporting plates 21 and 22, is of a hollow or concave design at its upper side (Figure 5). The front side of the scraper element 24 has a shape which is adapted to the outer circumference of the tubular portion 12 of the packer roller 11, so that it can bear thereagainst over its entire width.

Figures 6 and 7 show an embodiment wherein a support 17 is attached to a box-like carrier 15A by means of bolts 17A. The bolts 17A are arranged at the upper side of the support 17 and are located in front of and behind the box-like carrier 15A having an at least substantially square cross-section. At the upper side of the carrier 15A there is arranged between the bolts a clamping strip 17B which is clamped thereagainst by means of nuts screwed on the bolts.

Inside the box-like frame portion 1, each of the shafts 2 of a soil working member 3 is provided with a pinion 25, the arrangement being such that the pinions on the shafts of adjacent soil working members 3 are in driving connection with each other. Near the centre of the box-like frame portion 1, the shaft 2 of a soil working member 3 is extended upwardly and reaches by means of this extension into a gear box 26 mounted on the upper side of the box-like frame portion 1. Inside the gear box 26, the extension is in driving connection via a bevel gear transmission to a shaft which extends in the direction of operative travel A and which, via a speed variator 27, is connected to a superjacent shaft projecting from the gear box at the front side. The projecting end of the last-mentioned shaft can be connected to the power take-off shaft of a tractor via an intermediate shaft 28. Near its front side, the box-like frame portion 1 is fitted with a trestle 29 including a three-point connection for coupling the machine to the three-point lifting hitch of a tractor.

The machine as described in the foregoing operates as follows:

During operation, the machine is connected to the three-point lifting hitch of a tractor by means of the trestle 29 and, during movement in a direction indicated by the arrow A, the respective soil working members 3 are driven such from the power take-off shaft of the tractor via the intermediate shaft 28 and the above-described transmission that two adjacent soil working members 3 rotate in opposite directions, whereby their soil working elements 5 cultivate at least contiguous strips of soil. During operation, the machine bears on the packer roller 11, by means of which the working depth of the soil working members 3 can be set with the aid of the adjusting device provided at the rear side of the box-like frame portion 1. By means of the scraper members 14, which are arranged via the box-like carrier beam 15, 15A and the U-shaped supports 17 and extend to between the crowns of cams 13 on the packer roller 11, it is possible to achieve that the packer roller 11 is kept free from adhering soil during operation. Due to the fact that the front side of the scraper element 24 is located at a circumferential angle of at least 60° below the horizontal plane through the rotational axis a of the roller, as is apparent from Figure 3, the adhering soil is scraped off almost immediately, so that no large clods can be formed. By means of the single bolt 19, by means of which the arm 18 of a scraper member is attached to a U-shaped support 17, it is easily possible to obtain an after-setting of the respective scraper elements 24 by sliding of the arm 18. The hollow or concave design of a scraper element 24 constitutes an effective strengthening thereof, so that damage caused by a stone caught between the crowns of cams 13 is less likely to occur. This is also the case due to the fact that the arm 18 of the scraper member is arranged at the lower side of the box-like carrier beam 15, 15A at a lower level than the rotational axis a of the roller 11 and extends itself over a portion at least substantially tangentially relative thereto, so that for the stones to be released there is present a certain guide. The box-like carrier beam 15, 15A has a high rigidity, while nevertheless a light construction and an easy attachment of the scraper members remain possible. Owing to the fact that the arm 18 is supported by the support 17 over a considerable length, the assembly is hardly susceptible to deformation and damage.

## Claims

1. A soil cultivating machine comprising a plurality of soil working members (3) and at least one roller (11) which is provided with a plurality of scraper members (14), characterized in that the scraper members (14) include an arm (18) which is arranged slidably at the lower side of a box-like carrier (15, 15A) extending along said roller (11).

2. A soil cultivating machine as claimed in claim 1, characterized in that the arm (18) of a scraper member (14) is arranged at the box-like carrier (15, 15A) by means of an at least substantially horizontal bolt (19).

3. A soil cultivating machine as claimed in any one of the preceding claims, characterized in that the box-like carrier (15, 15A) has a rectangular cross-section.

4. A soil cultivating machine as claimed in any one of the preceding claims, characterized in that a scraper member (14) includes a scraper element (24) having a hollow or concave design at its upper side.

5. A soil cultivating machine as claimed in any one of the preceding claims, characterized in that the arm (18) of a scraper member (14) is attached to the carrier (15, 15A) by means of only one bolt (19).

6. A soil cultivating machine as claimed in any one of the preceding claims, characterized in that an arm (18) of a scraper member (14) is arranged to the carrier (15, 15A) between two downwardly extending plates of a support (17).

7. A soil cultivating machine as claimed in claim 6, characterized in that the plates constitute the legs of a U-shaped support, of which the portion located between the legs is attached to the carrier (15, 15A).

8. A soil cultivating machine as claimed in claim 7, characterized in that the portion located beween the legs of the U-shaped support (17) includes a downwardly directed bulge (18A), against which abuts the upper side of the arm (18).

9. A soil cultivating machine as claimed in claim 7 or 8, characterized in that the legs of the U-shaped support (17) differ in length and are bent outwardly at right angles over part of their lower ends.

10. A soil cultivating machine as claimed in any one of the preceding claims, characterized in that the arm (18) of a scraper member (14) is strip-shaped, the widest portion of said strip being directed upwardly.

11. A soil cultivating machine as claimed in any one of the preceding claims, characterized in that the arm portion carrying a scraper element (24) extends at least substantially tangentially relative to the rotational axis of the roller (11).

12. A soil cultivating machine as claimed in any one of claims 2 to 11, characterized in that the bolt (19) for the attachment of the arm (18) extends at least substantially parallel to the longitudinal centre line of the carrier (15, 15A).

13. A soil cultivating machine as claimed in any one of claims 7 to 12, characterized in that the bolt (19) is arranged in a slot (20) provided in the legs of the U-shaped support, the said slot (20) extending in the direction of operative travel (A).

14. A soil cultivating machine as claimed in any one of claims 4 to 13, characterized in that a scraper element (14) is arranged at the lower side of a support plate (21) provided at the lower side of the arm (18), and that there is present a second support plate (22) provided below the scraper element (24).

15. A soil cultivating machine as claimed in any one of claims 4 to 14, characterized in that the scraper element (14) extends at least substantially horizontally.

16. A soil cultivating machine as claimed in any one of claims 4 to 15, characterized in that the front side of the scraper element (24) has a curved shape, the arrangement being such that it is adapted to the outer circumference of a tubular roller portion (12).

17. A soil cultivating machine as claimed in any one of the preceding claims, characterized in that the centre of the carrier (15, 15A) for the scraper members (14) is located at least substantially at the level of the rotational axis (a) of the roller (11).

18. A soil cultivating machine as claimed in any one of the preceding claims, characterized in that there is present a plurality of soil working members (3) which are rotatable about upwardly directed shafts (12), behind which soil working members the roller (11) is arranged movably in height.

FIG. 1

FIG. 2

FIG. 5

FIG. 3

FIG. 4

EP 0 338 646 A2

FIG. 6

FIG. 7